# EUROPEAN PATENT APPLICATION

(11) **EP 4 408 066 A1**
(43) Date of publication of application: **31.07.2024**
(21) Application number: 21958427.3
(22) Date of filing: 24.09.2021
(51) Int. Cl.: H04W 28/04

(54) **TERMINAL AND COMMUNICATION METHOD**

(71) Applicant: NTT DOCOMO, INC., Tokyo 100-6150 (JP)
(72) Inventor: KUMAGAI, Shinya, Tokyo 100-6150 (JP); TAKAHASHI, Yuki, Tokyo 100-6150 (JP); NAGATA, Satoshi, Tokyo 100-6150 (JP); PI, Qiping, Beijing, 100190 (CN); WANG, Jing, Beijing, 100190 (CN); CHEN, Lan, Beijing, 100190 (CN)
(74) Representative: Hoffmann Eitle
(86) International application number: PCT/JP2021/035197
(87) International publication number: WO 2023/047553

(57) **Abstract**

A terminal includes: a transmission unit configured to transmit a HARQ (Hybrid automatic repeat request) response to a base station; a reception unit configured to receive control information of triggering retransmission of the HARQ response from the base station; and a control unit configured to determine the HARQ response to be retransmitted. The control unit determines a cell to which a slot offset included in the control information is to be applied, applies the slot offset to the cell to determine a first slot in the cell, and determine, based on the first slot, a cell in which the HARQ response to be retransmitted has been transmitted and a second slot, and the transmission unit transmits the determined HARQ response to the base station.

## Description

### FIELD OF THE INVENTION

The present invention relates to a terminal and a communication method in a wireless communication system.

### BACKGROUND OF THE INVENTION

In 3GPP (3rd Generation Partnership Project), in order to realize further larger system capacity, further faster data transmission speed, further lower latency in a wireless communication section, etc., a wireless communication method called "5G" or "NR (New Radio)" has been discussed (hereinafter, the wireless communication method is referred to as "NR"). In 5G, various wireless technologies and network architectures are being discussed to satisfy the requirement of a radio link delay of 1 ms or less while achieving throughput of 10 Gbps or more (e.g., Non-Patent Document 1).

In addition, discussions related to a future system later than 5G, or 6G, have been started. In the future system, further improvement of communication performance and wider variety of use cases are expected.

### Citation List

### Non-Patent Document

Non-Patent Document 1: 3GPP TS 38.300 V16.6.0 (2021-06)

### SUMMARY OF THE INVENTION

### TECHNICAL PROBLEM

In NR or in further later systems, an enhancement of the HARQ-ACK (Hybrid automatic repeat request - Acknowledgement) feedback from a terminal to the network is being discussed. For example, retransmission of HARQ-ACK can be requested from the network to a terminal. However, a method of indicating the HARQ-ACK to be retransmitted to the terminal is not clear.

The present invention has been made in view of the above points, and it is an object of the present invention to retransmit a response related to retransmission control in the wireless communication system.

### SOLUTION TO PROBLEM

According to the disclosed technique, a terminal is provided. The terminal includes: a transmission unit configured to transmit a HARQ (Hybrid automatic repeat request) response to a base station; a reception unit configured to receive control information of triggering retransmission of the HARQ response from the base station; and a control unit configured to determine the HARQ response to be retransmitted. The control unit determines a cell to which a slot offset included in the control information is to be applied, applies the slot offset to the cell to determine a first slot in the cell, and determine, based on the first slot, a cell in which the HARQ response to be retransmitted has been transmitted and a second slot, and the transmission unit transmits the determined HARQ response to the base station.

### ADVANTAGEOUS EFFECTS OF INVENTION

According to the disclosed technique, it is possible to retransmit a response related to retransmission control in a wireless communication system.

### BRIEF DESCRIPTION OF THE DRAWINGS

[Fig. 1] is a drawing for describing a wireless communication system in an embodiment of the present invention.
[Fig. 2] is a drawing illustrating an example (1) of HARQ-ACK retransmission.
[Fig. 3] is a drawing illustrating an example (2) of HARQ-ACK retransmission.
[Fig. 4] is a drawing for describing an example of HARQ-ACK retransmission.
[Fig. 5] is a drawing illustrating an example (1) of HARQ-ACK retransmission in an embodiment of the present invention.
[Fig. 6] is a drawing illustrating an example (2) of HARQ-ACK retransmission in an embodiment of the present invention.
[Fig. 7] is a drawing illustrating an example (3) of HARQ-ACK retransmission in an embodiment of the present invention.
[Fig. 8] is a drawing illustrating an example (4) of HARQ-ACK retransmission in an embodiment of the present invention.
[Fig. 9] is a drawing illustrating an example (5) of HARQ-ACK retransmission in an embodiment of the present invention.
[Fig. 10] is a drawing illustrating an example (6) of HARQ-ACK retransmission in an embodiment of the present invention.
[Fig. 11] is a drawing illustrating an example (7) of HARQ-ACK retransmission in an embodiment of the present invention.
[Fig. 12] is a drawing illustrating an example of a functional configuration of a base station 10 in an embodiment of the present invention.
[Fig. 13] is a drawing illustrating an example of a functional configuration of a terminal 20 in an embodiment of the present invention.
[Fig. 14] is a drawing illustrating an example of a hardware structure of the base station 10 or the terminal 20 in an embodiment of the present invention.
[Fig. 15] is a drawing illustrating an example of a structure of a vehicle 2001 in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by the base station 10 or the terminal 20 is configured.

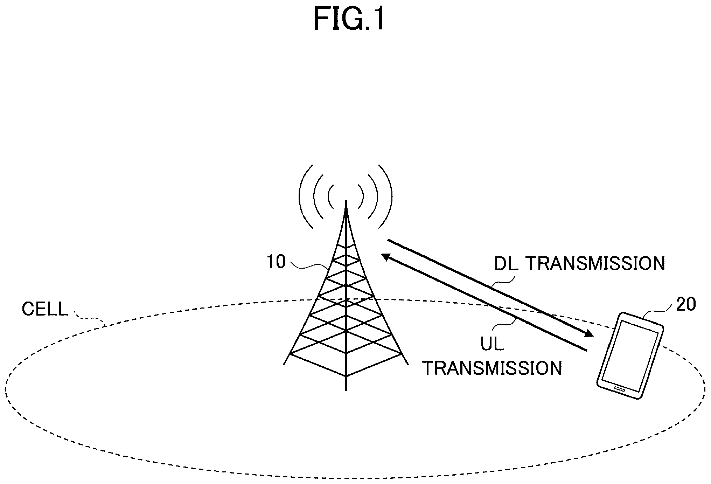

Fig. 1 is a drawing illustrating a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. In addition, a TTI (Transmission Time Interval) in the time domain may be a slot or a sub-slot, or the TTI may be a subframe.

The base station 10 can perform carrier aggregation to communicate with the terminal 20 by bundling a plurality of cells (multiple CCs (component carriers)). In carrier aggregation, one primary cell (PCell) and one or more secondary cells (SCells) are used.

The base station 10 transmits a synchronization signal, system information, and the like, to the terminal 20. The synchronization signal is, for example, an NR-PSS and an NR-SSS. The system information may be transmitted via a NR-PBCH or a PDSCH, for example, and may be referred to as broadcast information. As shown in Fig. 1, the base station 10 transmits a control signal or data in DL (Downlink) to the terminal 20 and receives a control signal or data in UL (Uplink) from the terminal 20. Note that, here, what is transmitted via a control channel such as PUCCH and PDCCH is called a control signal, and what is transmitted via a shared channel such as PUSCH and PDSCH is called data. These names are mere examples.

The terminal 20 may be a communication apparatus that includes a wireless communication function such as a smart-phone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. Note that the terminal 20 may be referred to as a UE, and the base station 10 may be referred to as a gNB.

The terminal 20 can perform carrier aggregation to communicate with the base station 10 by bundling a plurality of cells (a plurality of CCs). In carrier aggregation, one primary cell and one or more secondary cells are used. In addition, PUCCH-SCell having PUCCH may be used.

Here, in NR or in further later systems, an enhancement of the HARQ-ACK (Hybrid automatic repeat request - Acknowledgement) feedback from a terminal to the network is being discussed. For example, retransmission of HARQ-ACK can be requested from the network to a terminal.

One-shot triggering of HARQ-ACK retransmission may be performed for the terminal 20 via DL grant DCI (Downlink Control Information). One-shot triggering of retransmission may mean triggering (requesting to the terminal 20) one retransmission.

A single DCI used for one-shot triggering may perform triggering of one HARQ-ACK codebook alone. For example, the terminal 20 is not required to be expected to retransmit a HARQ-ACK codebook in a PUCCH slot that is different from a PUCCH slot of a HARQ-ACK codebook to be retransmitted, in the PUCCH slot used for retransmission.

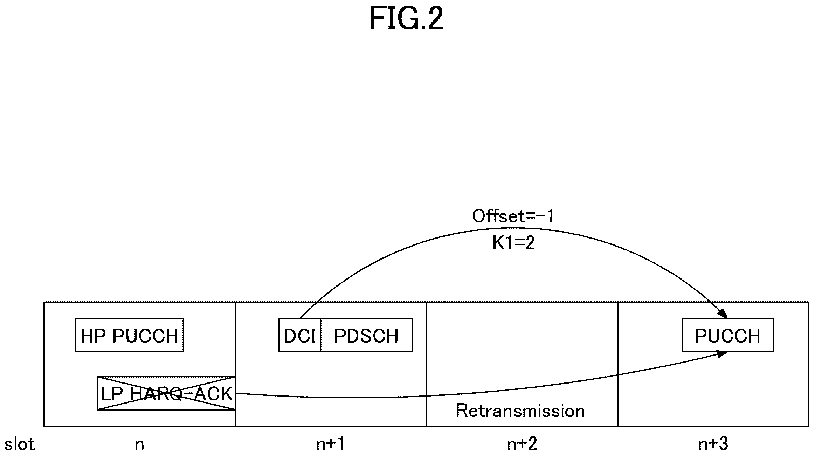

Fig. 2 is a drawing illustrating an example (1) of HARQ-ACK retransmission. As illustrated in Fig. 2, the PUCCH including the HARQ-ACK to be retransmitted may be specified by an offset from the slot including the retransmission triggering DCI. In an example of Fig. 2, the offset is equal to -1, and the retransmission target is a PUCCH that is located one slot before the slot in which the retransmission triggering DCI is received.

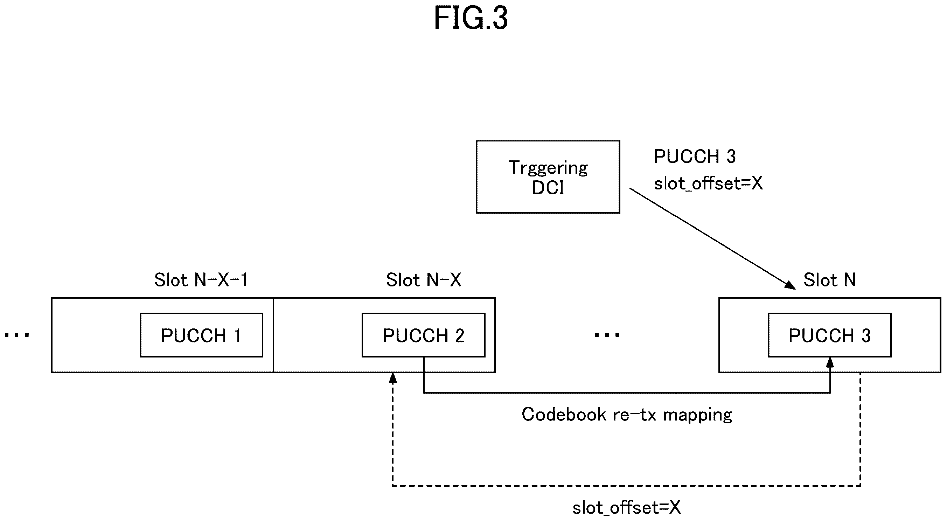

Fig. 3 is a drawing illustrating an example (2) of HARQ-ACK retransmission. As illustrated in Fig. 3, the PUCCH including the HARQ-ACK to be retransmitted may be specified by an offset from the slot for retransmitting PUCCH. In an example of Fig. 3, the offset is equal to X, and the retransmission target is PUCCH of a slot N-X that is located X slots before the slot N for retransmitting PUCCH.

The HARQ-ACK to be retransmitted may be determined based on the slot of the HARQ-ACK to be retransmitted and the physical layer priority.

Here, it is necessary to further clarify the method of determining the HARQ-ACK to be retransmitted based on the slot offset value. For example, it is necessary to determine whether the HARQ-ACK retransmission triggered by a one-shot triggering DCI for triggering the HARQ-ACK retransmission is limited to be applied within the same PUCCH cell group or is also applied between different PUCCH cell groups. For example, it is necessary to determine the interpretation of the slot offset value.

In addition, in a case where the PUCCH carrier switching is taken into account, it is necessary to determine whether the HARQ-ACK is to be retransmitted in a cell other than PCell, PSCell, or PUCCH-SCell. For example, it is necessary to determine whether enabling of the PUCCH carrier switching is to be allowed for the HARQ-ACK retransmission triggered by one-shot triggering. For example, it is necessary to determine how to determine the cell in which the HARQ-ACK to be retransmitted has been transmitted. For example, in a case where the PUCCH carrier switching is enabled, it is necessary to take into account the impact on the interpretation of the slot offset value.

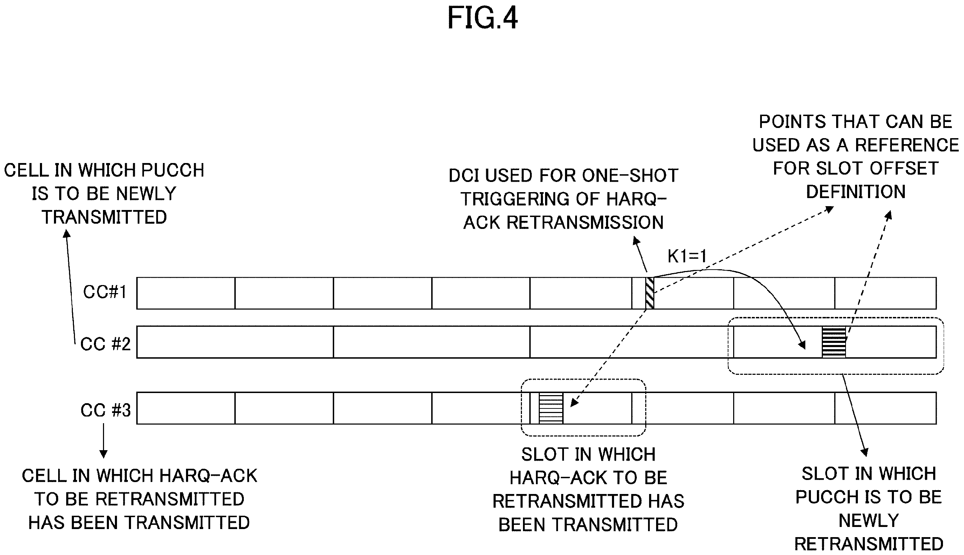

Fig. 4 is a drawing for describing an example of HARQ-ACK retransmission. The slot in which the HARQ-ACK to be retransmitted has been transmitted and the cell in which the HARQ-ACK to be retransmitted has been transmitted may be defined as illustrated in Fig. 4. It is to be noted that, hereinafter, the HARQ-ACK may be replaced with the HARQ-ACK codebook or the HARQ-ACK CB (code book). In addition, the slot in which PUCCH is newly retransmitted and the cell in which PUCCH is newly retransmitted may be defined as illustrated in Fig. 4. In addition, as illustrated in Fig. 4, the slot in which PUCCH is newly retransmitted may be specified by the K1 value from the one-shot triggering DCI that triggers the HARQ-ACK retransmission. In addition, as illustrated in Fig. 4, the slot offset value may correspond to an offset from the slot in which the HARQ-ACK to be retransmitted has been transmitted to the one-shot triggering DCI for HARQ-ACK retransmission or to the slot used for newly retransmitting PUCCH. In other words, the points that can be referred to for the slot offset definition may be the one-shop triggering DCI for HARQ-ACK retransmission and the slot used for newly retransmitting PUCCH.

The HARQ-ACK retransmission may be performed at the timing indicated by the base station 10 (for example, slot n+k). The k is a K1 value that is indicated by the one-shot triggering DCI for retransmission, and the slot n is a slot in which the one-shot triggering DCI for retransmission is received. The terminal 20 may assume that PUCCH to be newly retransmitted is to be transmitted X symbols after the last symbol of receiving PDCCH of the one-shot triggering DCI for retransmission. In other words, the terminal 20 may assume that the transmission of PUCCH to be newly retransmitted before X symbols after the last symbol of receiving PDCCH of the one-shot triggering DCI for retransmission is not indicated by the K1 value. X may be defined by technical specifications, or may be configured by RRC signaling. X may depend on the UE capability, or may be associated with the smaller SCS between the SCS of the retransmission triggering PDCCH and the SCS of the PUCCH used for newly performing the retransmission. It is to be noted that the slot used for receiving DCI and the slot used for receiving PDCCH may be replaced with each other.

When determining the HARQ-ACK to be retransmitted, the terminal 20 is not required to assume that the retransmission of HARQ-ACK transmitted in a PUCCH cell group that is different from the PUCCH cell group associated with the cell used for transmitting the one-shot triggering DCI for retransmission is to be one-shot triggered by the one-shot triggering DCI. In a case where the PUCCH carrier switching is disabled, the cell in which the HARQ-ACK to be retransmitted has been transmitted is always one of PCell, PSCell, or PUCCH-SCell of a PUCCH cell group that is the same as that of a cell used for transmitting the retransmission-triggering DCI.

In addition, when determining the HARQ-ACK to be retransmitted, the terminal 20 may assume that the retransmission of HARQ-ACK transmitted in a PUCCH cell group that is different from the PUCCH cell group associated with the one-shot triggering DCI for retransmission is to be one-shot triggered by the one-shot triggering DCI. The cell in which the HARQ-ACK to be retransmitted has been transmitted may be explicitly indicated by the DCI field, or may be configured by RRC signaling. For example, in a case where the retransmission-triggering DCI is transmitted in cell#1, the DCI may always trigger the retransmission of HARQ-ACK in CC#n, or may trigger the retransmission of HARQ-ACK in the PUCCH cell group #i.

The slot offset value indicated by the retransmission-triggering DCI may be interpreted based on the numerology (for example, SCS) of the reference cell. The reference cell may be a cell that is described in 1) to 9) below.

1) Cell that is explicitly indicated by the retransmission-triggering DCI.
2) PUCCH cell included in a PUCCH cell group that is the same as the PUCCH cell group associated with the retransmission-triggering DCI. For example, one of PCell, PSCell, or PUCCH-SCell of the same PUCCH cell group.
3) Cell for retransmitting HARQ-ACK
4) Cell in which the HARQ-ACK to be retransmitted has been transmitted.
5) Cell for transmitting the retransmission-triggering DCI.
6) Default reference cell. For example, the default reference cell may be configured for each PUCCH cell group by the DCI format that enables retransmission of the HARQ-ACK that is triggered by one-shot triggering. In addition, the default reference cell may be configured by RRC signaling. In addition, the default cell may be configured by having candidate cells configured by RRC signaling and by having the cell for retransmitting HARQ-ACK selected from the candidate cells by DCI.
7) The cell may be a cell having the largest cell ID or smallest cell ID among all cells. For example, the cell may be a cell having the largest cell ID or smallest cell ID among cells included in the same PUCCH cell group. For example, the cell may be a cell having the largest cell ID or smallest cell ID among the cells described in the above-described 1), 2), and 3).
8) The cell may be a cell for which the largest SCS or smallest SCS is configured among all cells. For example, the cell may be a cell for which the largest SCS or smallest SCS is configured among the cells included in the same PUCCH cell group. For example, the cell may be a cell for which the largest SCS or smallest SCS is configured among the cells described in the above-described 1), 2), and 3).
9) The cell may be a cell having the largest cell ID or smallest cell ID among cells having larger SCS/smaller SCS/the same SCS in: a cell for retransmission-triggering DCI; a cell in which the HARQ-ACK to be retransmitted has been transmitted; a cell of PUCCH for transmitting the retransmission; PCell; PSCell; and PUCCH-SCell.

Based on the above-described reference cell, the cell and slot in which the HARQ-ACK to be transmitted has been transmitted may be determined by performing the following step 1 and step 2. It is to be noted that the reference point may be a slot and cell of the HARQ-ACK retransmission-triggering DCI, or may be a slot and cell of PUCCH for retransmission.

Step 1) Determine the slot in the reference cell by using the offset equal to the indicated slot offset relative to the reference point. In addition, the following two cases may be assumed.
Case 1) A case in which the reference cell for interpreting the slot offset value is a cell of the reference point for defining the slot offset. For example, a case in which the reference cell is PCell, PSCell, or PUCCH-SCell of a PUCCH cell group that is the same as that of the retransmission-triggering DCI cell, and the slot offset is defined relative to the PUCCH for retransmission. In addition, for example, a case in which the reference cell is the retransmission-triggering DCI cell, and the slot offset is defined relative to the retransmission-triggering DCI cell. It is to be noted that the slot offset=0 may mean the reference point.
Case 2) A case in which the reference cell for interpreting the slot offset value is different from the cell of the reference point for defining the slot offset. For example, a case in which the reference cell is PCell, PSCell, or PUCCH-SCell of a PUCCH cell group that is the same as that of the retransmission-triggering DCI cell, and the slot offset is defined relative to the retransmission-triggering DCI. In addition, for example, a case in which the reference cell is the retransmission-triggering DCI cell, and the slot offset is defined relative to the PUCCH for retransmission. It is to be noted that the slot offset=0 may mean the slot of the reference cell that overlaps with the start or end of the DCI reception, or may mean the slot of the reference cell that overlaps with the start or end of the DCI reception slot in a case where the slot offset is defined relative to the retransmission-triggering DCI. In addition, the slot offset=0 may mean the slot of the reference cell that overlaps with the start or end of the PUCCH slot for retransmission in a case where the slot offset is defined relative to the PUCCH for retransmission.
Step 2) Determine the slot in which the HARQ-ACK to be retransmitted has been transmitted in a cell in which the HARQ-ACK to be retransmitted has been transmitted. In addition, the following two cases may be assumed.
Case A) A case in which the reference cell is a cell in which the HARQ-ACK to be retransmitted has been transmitted. The slot that is determined in the above-described step 1 is a slot in which the HARQ-ACK to be retransmitted has been transmitted in the cell in which the HARQ-ACK to be retransmitted has been transmitted.
Case B) A case in which the reference cell is different from a cell in which the HARQ-ACK to be retransmitted has been transmitted. In a case where the SCS of the cell in which the HARQ-ACK to be retransmitted has been transmitted is equal to or less than the SCS of the reference cell, the slot in which the HARQ-ACK to be retransmitted has been transmitted may be a slot of a cell in which the HARQ-ACK to be retransmitted has been transmitted, the slot overlapping with the slot of the reference cell that is determined based on the slot offset indication. In addition, in a case where the SCS of the cell in which the HARQ-ACK to be retransmitted has been transmitted is greater than the SCS of the reference cell, the slot in which the HARQ-ACK to be retransmitted has been transmitted may be the first or last slot of a plurality of slots of a cell in which the HARQ-ACK to be retransmitted has been transmitted, the plurality of slots overlapping with the slot of the reference cell that is determined based on the slot offset indication.

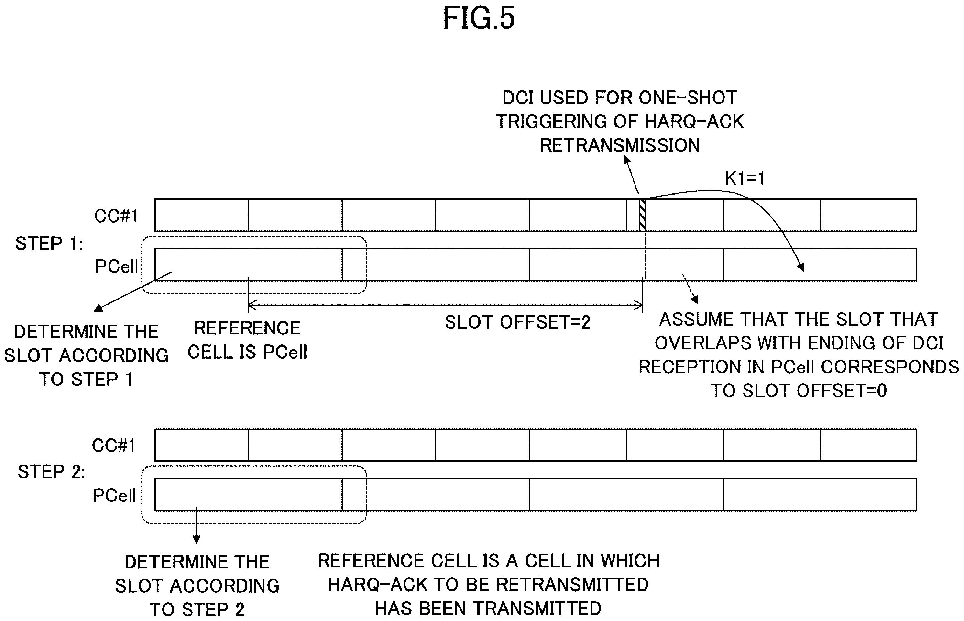

Fig. 5 is a drawing illustrating an example (1) of HARQ-ACK retransmission in an embodiment of the present invention. Fig. 5 illustrates an example in which the step 1 is the above-described case 2, and the step 2 is the above-described case A. The reference point of the slot offset is defined according to the retransmission-triggering DCI reception. The reference cell is PCell, PSCell, or PUCCH-SCell of a PUCCH cell group that is the same as that of the retransmission-triggering DCI cell. As illustrated in Fig. 5, in step 1, the retransmission-triggering DCI is transmitted in CC#1. In a PCell that is the reference cell, a slot is determined whose slot offset from the slot overlapping with the retransmission-triggering DCI is 2. In step 2, the reference cell is the cell in which the HARQ-ACK to be retransmitted has been transmitted, and thus, the slot that is determined in step 1 becomes the slot determined in step 2.

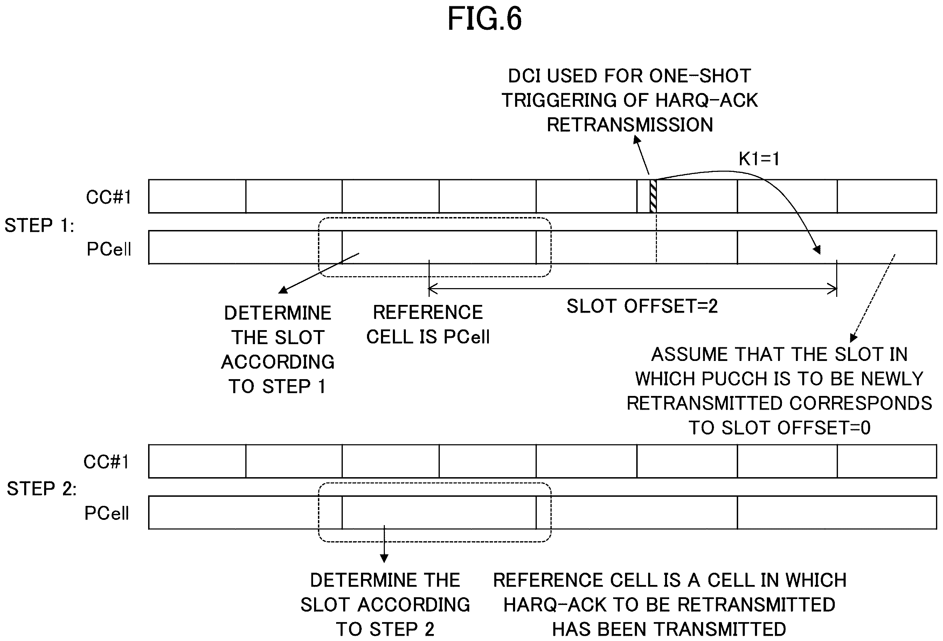

Fig. 6 is a drawing illustrating an example (2) of HARQ-ACK retransmission in an embodiment of the present invention. Fig. 6 illustrates an example in which the step 1 is the above-described case 1, and the step 2 is the above-described case A. The reference point of the slot offset is defined according to the PUCCH for retransmission. The reference cell is PCell, PSCell, or PUCCH-SCell of a PUCCH cell group that is the same as that of the retransmission-triggering DCI cell. As illustrated in Fig. 6, in step 1, the retransmission-triggering DCI is transmitted in CC#1. In a PCell that is the reference cell, a slot is determined whose slot offset from the slot of PUCCH for transmitting the retransmission is 2. In step 2, the reference cell is the cell in which the HARQ-ACK to be retransmitted has been transmitted, and thus, the slot that is determined in step 1 becomes the slot determined in step 2.

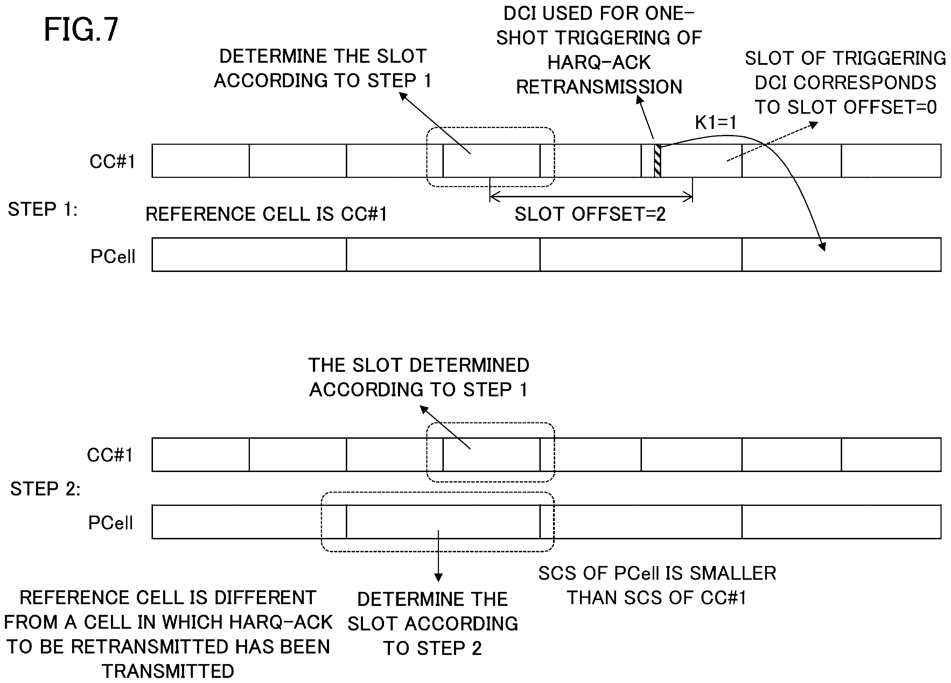

Fig. 7 is a drawing illustrating an example (3) of HARQ-ACK retransmission in an embodiment of the present invention. Fig. 7 illustrates an example in which the step 1 is the above-described case 1, and the step 2 is the above-described case B. The reference point of the slot offset is defined according to the retransmission-triggering DCI. The reference cell is the retransmission-triggering DCI cell. As illustrated in Fig. 7, in step 1, the retransmission-triggering DCI is transmitted in CC#1. In CC#1 that is the reference cell, a slot is determined whose slot offset from the slot of retransmission-triggering DCI is 2. In step 2, a slot of PCell in which the HARQ-ACK has been transmitted and which overlaps with the slot in the reference cell determined in step 1 becomes a slot determined in step 2. It is to be noted that, in Fig. 7, the reference cell is different from the cell in which the HARQ-ACK to be retransmitted has been transmitted, and the SCS of CC#1 that is the reference cell is greater than that of PCell for retransmitting the HARQ-ACK.

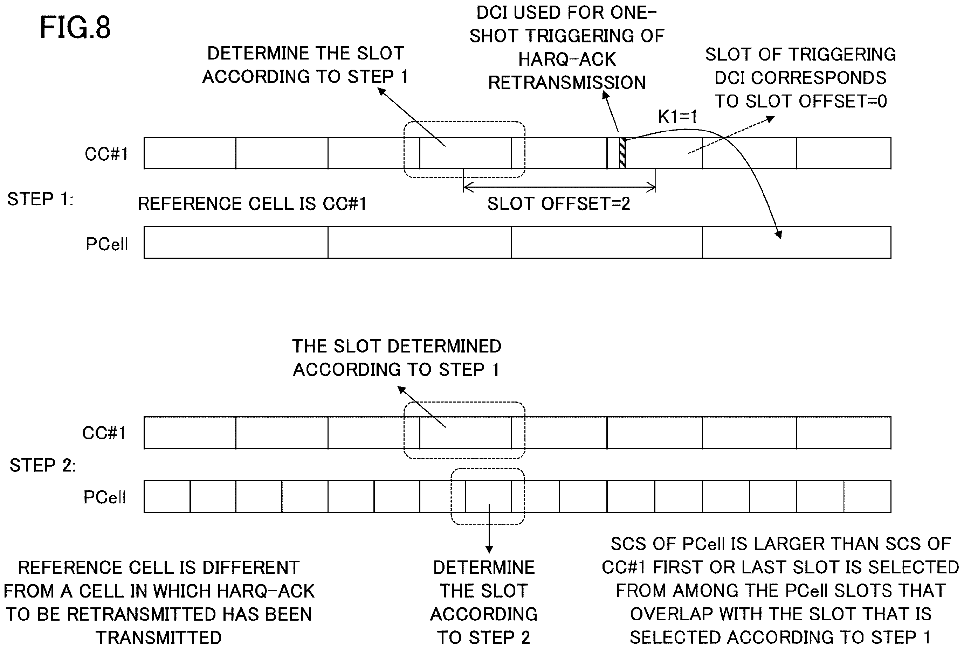

Fig. 8 is a drawing illustrating an example (4) of HARQ-ACK retransmission in an embodiment of the present invention. Fig. 8 illustrates an example in which the step 1 is the above-described case 1, and the step 2 is the above-described case B. The reference point of the slot offset is defined according to the retransmission-triggering DCI. The reference cell is the retransmission-triggering DCI cell. As illustrated in Fig. 8, in step 1, the retransmission-triggering DCI is transmitted in CC#1. In CC#1 that is the reference cell, a slot is determined whose slot offset from the slot of retransmission-triggering DCI is 2. In step 2, the last slot among a plurality of slots of PCell in which HARQ-ACK is transmitted, the plurality of slots overlapping with the slot in the reference cell determined in step 1 becomes the slot determined in step 2. It is to be noted that, in Fig. 8, the reference cell is different from the cell in which the HARQ-ACK to be retransmitted has been transmitted, and the SCS of CC#1 that is the reference cell is smaller than that of PCell for retransmitting the HARQ-ACK.

With respect to the dynamic or semi-static PUCCH carrier switching, the limitations described in 1) to 4) may be applied.

1) In a case where the dynamic or semi-static PUCCH carrier switching is enabled, the terminal 20 is not required to expect that, simultaneously, the one-shot triggering of HARQ-ACK retransmission is enabled by any DCI format. In addition, in a case where the dynamic or semi-static PUCCH carrier switching is enabled, simultaneously, the one-shot triggering of HARQ-ACK retransmission may be allowed to be enabled by one of the DCI formats.
2) In a case where the dynamic PUCCH carrier switching is enabled, the terminal 20 is not required to expect that, simultaneously, the one-shot triggering of HARQ-ACK retransmission is enabled by any DCI format. In addition, in a case where the dynamic PUCCH carrier switching is enabled, simultaneously, the one-shot triggering of HARQ-ACK retransmission may be allowed to be enabled by one of the DCI formats.
3) In a case where the semi-static PUCCH carrier switching is enabled, the terminal 20 is not required to expect that, simultaneously, the one-shot triggering of HARQ-ACK retransmission is enabled by any DCI format. In addition, in a case where the semi-static PUCCH carrier switching is enabled, simultaneously, the one-shot triggering of HARQ-ACK retransmission may be allowed to be enabled by one of the DCI formats.
4) In a case where the dynamic and semi-static PUCCH carrier switching is enabled, the terminal 20 is not required to expect that, simultaneously, the one-shot triggering of HARQ-ACK retransmission is enabled by any DCI format. In addition, in a case where the dynamic and semi-static PUCCH carrier switching is enabled, simultaneously, the one-shot triggering of HARQ-ACK retransmission may be allowed to be enabled by one of DCI formats.

In addition, the DCI format that triggers the HARQ-ACK retransmission may be a DCI format that is different from the DCI format for indicating the dynamic PUCCH carrier switching. For example, the DCI format that triggers the HARQ-ACK retransmission is not required to be capable of enabling the dynamic PUCCH carrier switching. For example, the terminal 20 is not required to expect that the dynamic PUCCH carrier switching is to be enabled according to the DCI format that triggers the HARQ-ACK retransmission. For example, the triggering of the HARQ-ACK retransmission is not required to be performed by the DCI format that enables the dynamic PUCCH carrier switching. For example, the terminal 20 is not required to expect that the HARQ-ACK retransmission is to be triggered by the DCI format that enables the dynamic PUCCH carrier switching.

In addition, the DCI format that triggers the HARQ-ACK retransmission may be a DCI format that is the same as the DCI format for indicating the dynamic PUCCH carrier switching. For example, the dynamic PUCCH carrier switching may be enabled by the DCI format that triggers the HARQ-ACK retransmission. For example, the terminal 20 may expect that the dynamic PUCCH carrier switching is to be enabled by the DCI format that triggers the HARQ-ACK retransmission. For example, the HARQ-ACK retransmission may be triggered by the DCI format that enables the dynamic PUCCH carrier switching. For example, the terminal 20 may expect that the HARQ-ACK retransmission is to be triggered by the DCI format that enables the dynamic PUCCH carrier switching.

In a case where the dynamic and/or semi-static PUCCH carrier switching is enabled and the one-shot triggering of the HARQ-ACK retransmission is enabled by one of the DCI formats, the cell in which the HARQ-ACK to be retransmitted has been transmitted may be explicitly indicated by a field of the DCI format. The field of the DCI format may be a new DCI field, or may be based on the reinterpretation of an existing field (for example, HPN, FDRA, TDRA, RV, MCS, or the like).

In a case where the DCI field is a new DCI field, when the dynamic PUCCH carrier switching and/or the semi-static PUCCH carrier switching is enabled by one of the DCI formats, the new DCI field may be configured to enable the one-shot triggering of the HARQ-ACK retransmission.

In a case where the DCI field is based on the reinterpretation of an existing field, the existing field may be interpreted to indicate the cell in which the HARQ-ACK to be retransmitted has been transmitted when the existing field indicates the triggering of the HARQ-ACK retransmission, the dynamic PUCCH carrier switching, and/or the semi-static PUCCH carrier switching.

According to the DCI field, the cell ID of the cell in which the HARQ-ACK to be retransmitted has been transmitted may be directly indicated, or an index of the cell included in the available PUCCH cell list may be indicated. The available PUCCH cell list may be configured by RRC signaling.

In addition, the terminal 20 is not required to expect that the cell, which is indicated by the DCI field, in which the HARQ-ACK to be retransmitted has been transmitted belongs to a PUCCH cell group that is different from that of the cell in which the HARQ-ACK is to be newly retransmitted.

In addition, the terminal 20 is not required to expect that the cell, which is indicated by the DCI field, in which the HARQ-ACK to be retransmitted has been transmitted belongs to a PUCCH cell group that is different from that of the retransmission-triggering DCI cell.

In addition, the terminal 20 is not required to expect that the cell, which is indicated by the DCI field, in which the HARQ-ACK to be retransmitted has been transmitted is different from the cell in which the HARQ-ACK is to be newly retransmitted.

In addition, the terminal 20 is not required to expect that the SCS of the cell, which is indicated by the DCI field, in which the HARQ-ACK to be retransmitted has been transmitted is larger or smaller than the SCS of the cell in which HARQ-ACK is to be newly retransmitted.

When the dynamic and/or semi-static PUCCH carrier switching is enabled and the one-shot triggering of the HARQ-ACK retransmission is enabled by one of DCI formats, in a case where the cell in which the HARQ-ACK to be retransmitted has been transmitted is explicitly indicated by a field of the DCI format, the reference cell for determining the slot offset value may be a cell described in 1) to 12) below.

1) Cell that is explicitly indicated by the retransmission-triggering DCI.
2) PUCCH cell included in a PUCCH cell group that is the same as the PUCCH cell group associated with the retransmission-triggering DCI. For example, one of PCell, PSCell, or PUCCH-SCell of the same PUCCH cell group.
3) Cell for retransmitting HARQ-ACK
4) Cell in which the HARQ-ACK to be retransmitted has been transmitted.
5) Cell for transmitting the retransmission-triggering DCI.
6) Default reference cell. For example, the default reference cell may be configured for each PUCCH cell group by the DCI format that enables retransmission of the HARQ-ACK that is triggered by one-shot triggering.
7) The cell may be a cell having the largest cell ID or smallest cell ID among all cells. For example, the cell may be a cell having the largest cell ID or smallest cell ID among cells included in the same PUCCH cell group. For example, the cell may be a cell having the largest cell ID or smallest cell ID among the cells described in the above-described 1), 2), and 3).
8) The cell may be a cell for which the largest SCS or smallest SCS is configured among all cells. For example, the cell may be a cell for which the largest SCS or smallest SCS is configured among the cells included in the same PUCCH cell group. For example, the cell may be a cell for which the largest SCS or smallest SCS is configured among the cells described in the above-described 1), 2), and 3).
9) The cell may be a cell having the largest cell ID or smallest cell ID among cells having larger SCS/smaller SCS/the same SCS in: a cell for retransmission-triggering DCI; a cell in which the HARQ-ACK to be retransmitted has been transmitted; a cell of PUCCH for transmitting the retransmission; PCell; PSCell; and PUCCH-SCell.
10) The cell may be a cell that is referenced in the PUCCH cell timing pattern in a case where the PUCCH cell timing pattern is configured.
11) The cell may be a cell having the largest or smallest cell ID among the available PUCCH cells in the PUCCH cell group.
12) The cell may be a cell having the largest or smallest SCS among the available PUCCH cells in the PUCCH cell group.

When the dynamic and/or semi-static PUCCH carrier switching is enabled and the one-shot triggering of the HARQ-ACK retransmission by one of DCI formats is enabled, in a case where the cell in which the HARQ-ACK to be retransmitted has been transmitted is explicitly indicated by the DCI format field, the method of determining the cell and slot in which the HARQ-ACK has been transmitted may be determined according to the above-described step 1 and step 2.

When the dynamic and/or semi-static PUCCH carrier switching is enabled and the one-shot triggering of the HARQ-ACK retransmission by one of DCI formats is enabled, in a case where the cell in which the HARQ-ACK to be retransmitted has been transmitted is not explicitly indicated by the DCI format field, the cell in which the HARQ-ACK to be retransmitted has been transmitted may be determined according to operations described in 1) to 4) below.

1) The cell in which the HARQ-ACK to be retransmitted has been transmitted may be a cell in which the HARQ-ACK is to be newly retransmitted. In addition, the cell in which the HARQ-ACK is to be newly retransmitted may be a cell in which the HARQ-ACK to be retransmitted has been transmitted. The target PUCCH cell determined by the PUCCH carrier switching rule may be a cell in which the HARQ-ACK is to be newly retransmitted. In a case where the retransmission-triggering DCI includes the target PUCCH carrier field, the target PUCCH carrier may be a cell in which the HARQ-ACK is to be newly retransmitted. In a case where the retransmission-triggering DCI does not include the target PUCCH carrier field and the PUCCH cell timing is semi-statically determined, the PUCCH cell according to the PUCCH cell timing may be a cell in which the HARQ-ACK is to be newly retransmitted.
2) The cell in which the HARQ-ACK to be retransmitted has been transmitted may be a cell of the retransmission-triggering DCI. In addition, the cell in which the HARQ-ACK is to be newly retransmitted may be a cell of the retransmission-triggering DCI.
3) The cell in which the HARQ-ACK to be retransmitted has been transmitted may be a default cell described below. For example, the default cell may include a PCell, a PSCell, and a PUCCH-SCell belonging to the PUCCH cell group that is the same as that of the cell in which the HARQ-ACK to be retransmitted has been transmitted. For example, the default cell may be a PUCCH cell with the largest or smallest SCS among all of the available PUCCH cells of a PUCCH cell group that is the same as that of the cell in which the HARQ-ACK to be retransmitted has been transmitted. For example, the default cell may a PUCCH cell with the largest or smallest cell ID among all of the available PUCCH cells of a PUCCH cell group that is the same as that of the cell in which the HARQ-ACK to be retransmitted has been transmitted. For example, the default cell may be a cell or carrier configured by RRC signaling.
4) The cell in which the HARQ-ACK to be retransmitted has been transmitted may be determined based on the slot offset and the PUCCH cell timing pattern, or may be determined according to step A) and step B) described below.

Step A) Determine a slot in the reference cell, based on the indicated slot offset value. The reference cell for the slot offset value interpretation may be one of the above-described reference cells. Regarding the method of determining the slot by applying the slot offset value in the reference cell, the above-described step 1 may be applied.
Step B) Determine the cell and slot in which the HARQ-ACK to be retransmitted has been transmitted. Based on the PUCCH cell pattern, the cell in which the HARQ-ACK to be retransmitted has been transmitted may be determined as the PUCCH cell corresponding to the slot in the reference cell determined in step A. In addition, the case 1) and the case 2) described below may be applied.
Case 1) In a case where the SCS of the reference cell is equal to or greater than the SCS according to the PUCCH cell pattern indication, only one PUCCH cell is determined based on the slot in the reference cell according to step A. In the determination of the slot in which the HARQ-ACK to be retransmitted has been transmitted, the above-described step 2 may be applied.
Case 2) In a case where the SCS of the reference cell is less than the SCS according to the PUCCH cell pattern indication, the terminal 20 is not required to assume this case. In addition, the terminal 20 may assume this case, and one or more PUCCH cells may correspond to the slot in the reference cell. For example, the terminal 20 is not required to expect that the PUCCH cell is to be different from the reference cell. In addition, for example, the terminal 20 may determine the first or last corresponding PUCCH cell among the multiple PUCCH cells corresponding to the slot in the reference cell as the cell in which the HARQ-ACK to be retransmitted has been transmitted.

It is to be noted that, in the above-described 1), 2), and 3), the interpretation of the slot offset and the determination of cell and slot in which the HARQ-ACK to be retransmitted has been transmitted may be performed according to the above-described step 1 and step 2.

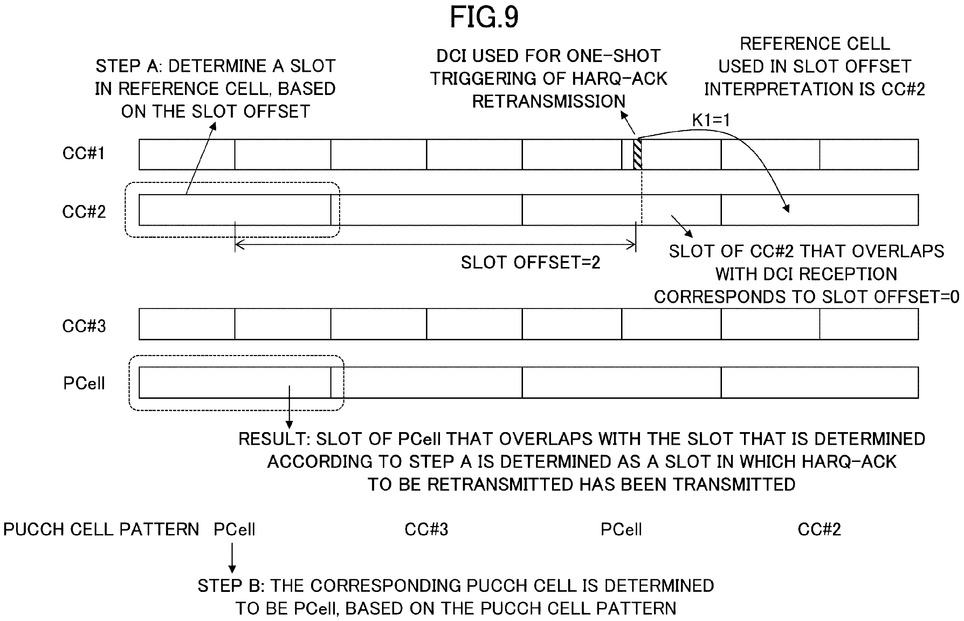

Fig. 9 is a drawing illustrating an example (5) of HARQ-ACK retransmission in an embodiment of the present invention. As illustrated in Fig. 9, the slot in the reference cell CC#2 is determined in step A, based on the slot offset. Subsequently, PCell is determined as the corresponding PUCCH cell in step B, based on the PUCCH cell pattern. As a result, the slot of PCell overlapping with the slot determined according to step A is determined as a slot in which the HARQ-ACK to be retransmitted has been transmitted.

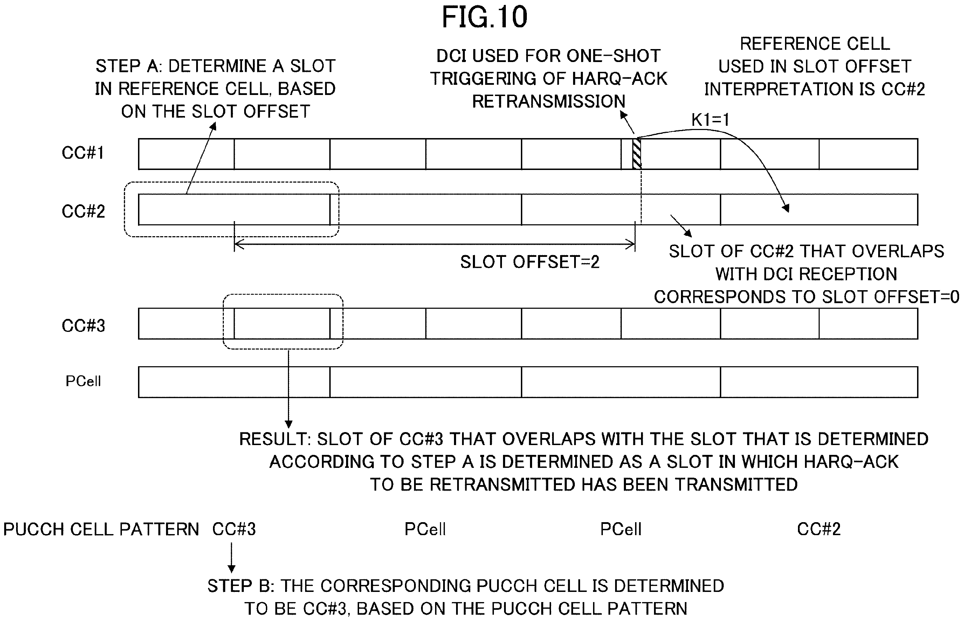

Fig. 10 is a drawing illustrating an example (6) of HARQ-ACK retransmission in an embodiment of the present invention. As illustrated in Fig. 10, the slot in the reference cell CC#2 is determined in step A, based on the slot offset. Subsequently, CC#3 is determined as the corresponding PUCCH cell in step B, based on the PUCCH cell pattern. As a result, the last slot among the slots of CC#3 overlapping with the slot determined according to step A is determined as a slot in which the HARQ-ACK to be retransmitted has been transmitted.

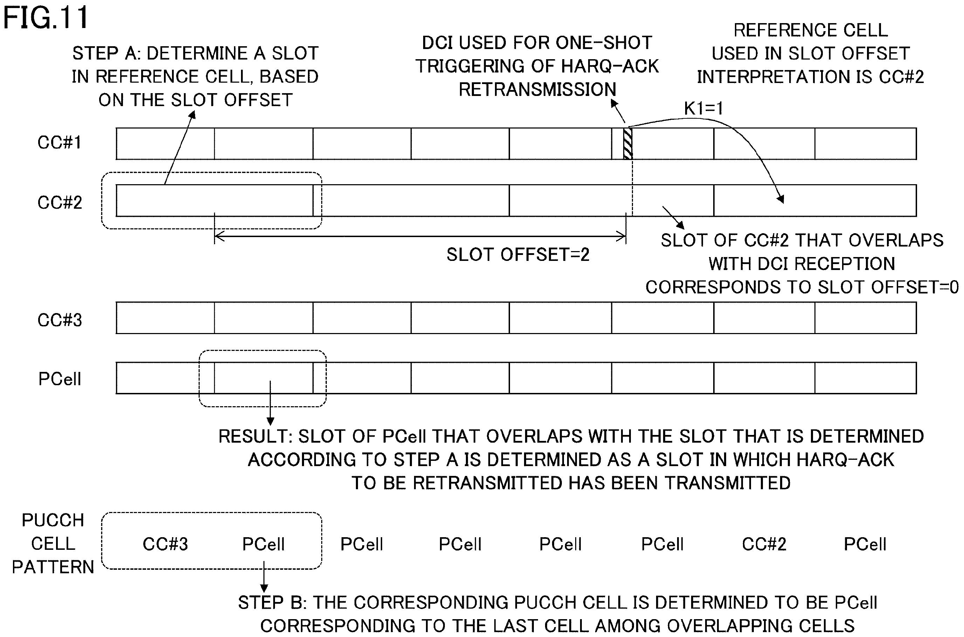

Fig. 11 is a drawing illustrating an example (7) of HARQ-ACK retransmission in an embodiment of the present invention. As illustrated in Fig. 11, the slot in the reference cell CC#2 is determined in step A, based on the slot offset. Subsequently, PCell that corresponds to the last cell among the overlapping cells of CC#3 and PCell is determined as the corresponding PUCCH cell in step B, based on the PUCCH cell pattern. As a result, the slot of PCell overlapping with the slot determined according to step A is determined as a slot in which the HARQ-ACK to be retransmitted has been transmitted.

Which of the above-described embodiments is to be applied may be configured by the upper layer parameter, may be reported from the terminal 20 to the network as the UE capability, may be defined in the technical specifications, or may be configured by the upper layer parameter and reported from the terminal 20 to the network as the UE capability.

The "slot" described in an embodiment of the present invention may be replaced with "subslot". The "PUCCH cell" described in an embodiment of the present invention may replaced with "PUCCH carrier" by taking into account the PUCCH carrier switching to SUL (Supplementary Uplink).

It is to be noted that the UE capabilities described in 1) to 5) below may be reported from the terminal 20 to the network.

1) UE capability of supporting one-shot triggering of the HARQ-ACK retransmission.
2) UE capability of supporting one-shot triggering of the HARQ-ACK retransmission in which the triggering is performed across different PUCCH cell groups.
3) UE capability of supporting PUCCH carrier switching.
4) UE capability of simultaneously enabling the PUCCH carrier switching and the one-shot triggering of the HARQ-ACK retransmission.
5) UE capability of supporting the one-shot triggering of HARQ-ACK retransmission between the first cell in which the HARQ-ACK to be retransmitted has been transmitted and the second cell for retransmitting the HARQ-ACK, the first cell being different from the second cell.

According to the above-described embodiments, the terminal 20 can identify the cell and slot in which the HARQ-ACK to be retransmitted has been transmitted and can retransmit the HARQ-ACK, based on an indication via DCI.

In other words, the response related to retransmission control can be retransmitted in the wireless communication system.

### (Device configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only one of the functions in an embodiment of the present invention.

### <Base station 10>

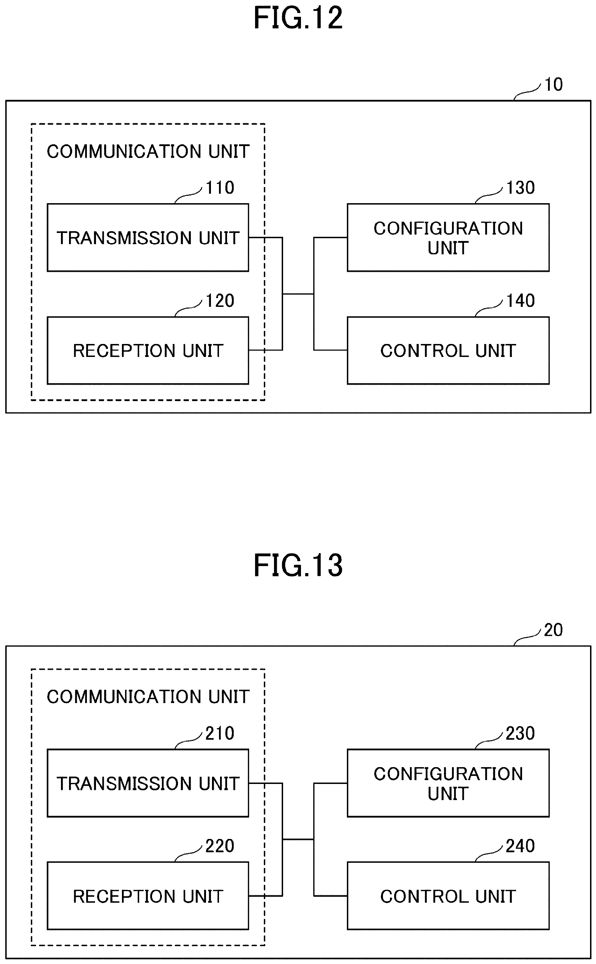

Fig. 12 is a diagram illustrating an example of a functional configuration of the base station 10. As shown in Fig. 12, the base station 10 includes a transmission unit 110, a reception unit 120, a configuration unit 130, and a control unit 140. The functional configuration illustrated in Fig. 12 is merely an example. Functional divisions and names of functional units may be anything as long as operations according to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function of transmitting NR-PSS, NR-SSS, NR-PBCH, DL/UL control signals, the DL data, and the like, to the terminal 20. In addition, the transmission unit 110 transmits configuration information, or the like, described in the embodiment.

The configuration unit 130 stores preset configuration information and various configuration information items to be transmitted to the terminal 20 in a storage apparatus and reads the preset configuration information from the storage apparatus as necessary. The control unit 140 performs, for example, resource allocation and control of the entire base station 10. Note the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, respectively.

### <Terminal 20>

Fig. 13 is a diagram illustrating an example of a functional configuration of the terminal 20. As shown in FIG. 13, the terminal 20 includes a transmission unit 210, a reception unit 220, a configuration unit 230, and a control unit 240. The functional configuration illustrated in Fig. 13 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the transmission unit 210 transmits a HARQ-ACK, and the reception unit 220 receives configuration information described in the embodiment.

The configuration unit 230 stores, in a storage device, various configuration information items received from the base station 10 via the reception unit 220, and reads them from the storage device as necessary. In addition, the configuration unit 230 also stores pre-configured configuration information. The control unit 240 controls the entire terminal 20. Note the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

### (Hardware structure)

In the above block diagrams used for describing an embodiment of the present invention (Fig. 12 and Fig. 13), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming, broadcasting, notifying, communicating, forwarding, configuring, reconfiguring, allocating, mapping, and assigning, etc. For example, a functional block (component) that functions to perform transmission is called a transmitting unit or a transmitter. In either case, as described above, the implementation method is not particularly limited.

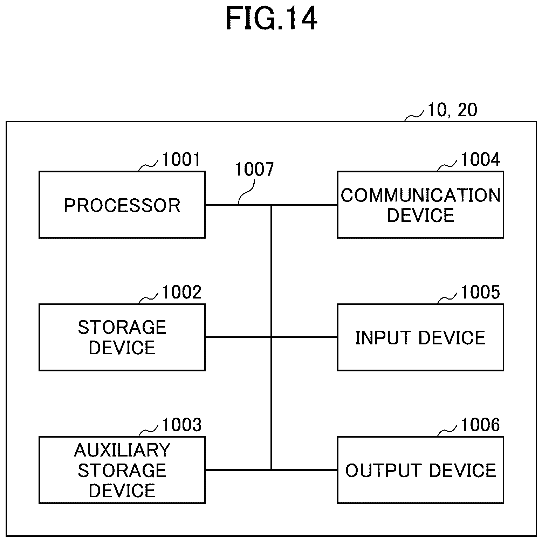

For example, the base station 10, terminal 20, etc., according to an embodiment of the present disclosure may function as a computer for processing the radio communication method of the present disclosure. Fig. 14 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may be configured without including some of the devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 12 may be realized by control programs that are stored in the storage device 1002 and are executed by the processor 1001. Further, for example, the control unit 240 of the terminal 20 illustrated in Fig. 13 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network and a wireless network, and may be referred to as a network device, a network controller, a network card, a communication module, etc. The communication device 1004 may include a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and the terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

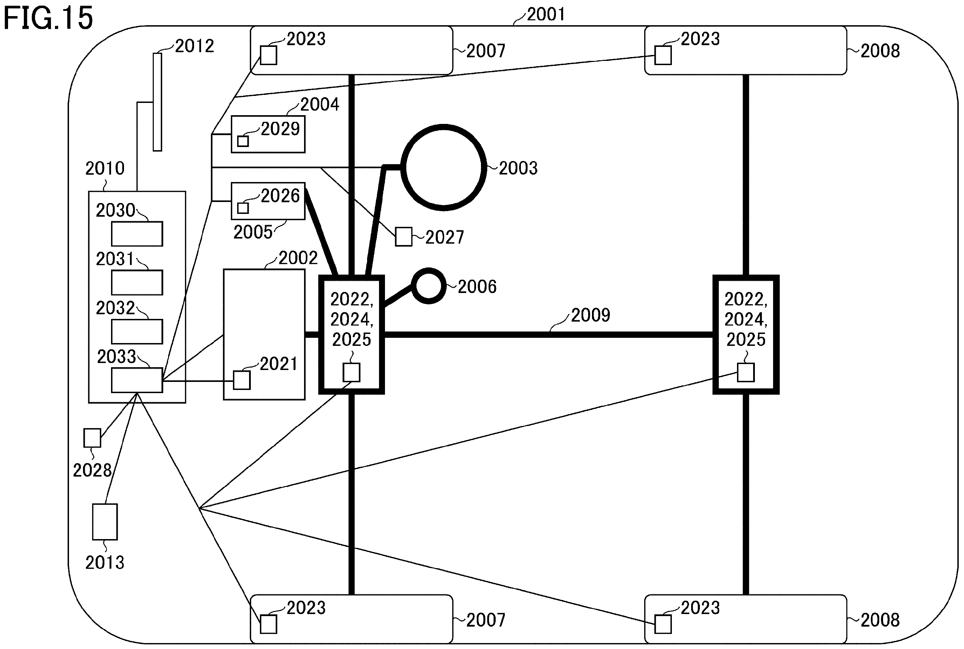

Fig. 15 shows an example of a configuration of a vehicle 2001. As shown in Fig. 15, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021-29 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in vehicle 2001.

### (Embodiment summary)

As described above, according to an embodiment of the present invention, a terminal is provided. The terminal includes: a transmission unit configured to transmit a HARQ (Hybrid automatic repeat request) response to a base station; a reception unit configured to receive control information of triggering retransmission of the HARQ response from the base station; and a control unit configured to determine the HARQ response to be retransmitted. The control unit determines a cell to which a slot offset included in the control information is to be applied, applies the slot offset to the cell to determine a first slot in the cell, and determine, based on the first slot, a cell in which the HARQ response to be retransmitted has been transmitted and a second slot, and the transmission unit transmits the determined HARQ response to the base station.

According to the above-described configuration, the terminal 20 can identify the cell and slot in which the HARQ-ACK to be retransmitted has been transmitted and can retransmit the HARQ-ACK, based on an indication via DCI. In other words, the response related to retransmission control can be retransmitted in the wireless communication system.

The control unit may assume that the cell to which the slot offset is to be applied is a cell used for retransmitting the determined HARQ response, or is a cell used for receiving the control information. According to the above-described configuration, the terminal 20 can identify the cell and slot in which the HARQ-ACK to be retransmitted has been transmitted and can retransmit the HARQ-ACK, based on an indication via DCI.

In a case where the first slot overlaps with a plurality of slots of a cell in which the HARQ response to be retransmitted has been transmitted, the control unit may determine the first or last slot among the plurality of slots as the second slot. According to the above-described configuration, the terminal 20 can identify the cell and slot in which the HARQ-ACK to be retransmitted has been transmitted and can retransmit the HARQ-ACK, based on an indication via DCI.

The control unit may determine the cell in which the HARQ response to be retransmitted has been transmitted, based on the PUCCH (Physical Uplink Control Channel) cell pattern. According to the above-described configuration, the terminal 20 can identify the cell and slot in which the HARQ-ACK to be retransmitted has been transmitted and can retransmit the HARQ-ACK, based on an indication via DCI.

In a case where the first slot overlaps with a plurality of cells in the PUCCH cell pattern, the control unit may determine the first or last cell among the plurality of cells as the cell in which the HARQ response to be retransmitted has been transmitted. According to the above-described configuration, the terminal 20 can identify the cell and slot in which the HARQ-ACK to be retransmitted has been transmitted and can retransmit the HARQ-ACK, based on an indication via DCI.

In addition, according to an embodiment of the present invention, a communication method performed by a terminal is provided. The communication method includes: transmitting a HARQ (Hybrid automatic repeat request) response to a base station; receiving control information of triggering retransmission of the HARQ response from the base station; determining the HARQ response to be retransmitted; determining a cell to which a slot offset included in the control information is to be applied; applying the slot offset to the cell to determine a first slot in the cell; determining, based on the first slot, a cell in which the HARQ response to be retransmitted has been transmitted and a second slot; and retransmitting the determined HARQ response to the base station.

According to the above-described configuration, the terminal 20 can identify the cell and slot in which the HARQ-ACK to be retransmitted has been transmitted and can retransmit the HARQ-ACK, based on an indication via DCI. In other words, the response related to retransmission control can be retransmitted in the wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer, decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The terms "determination" and "decision" may include "determination" and "decision" made with judging, calculating, computing, processing, deriving, investigating, searching (looking up, search, inquiry) (e.g., search in a table, a database, or another data structure), or ascertaining. Further, the "determining" may include "determining" made with receiving (e.g., receiving information), transmitting (e.g., transmitting information), inputting, outputting, or accessing (e.g., accessing data in a memory). Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of nonlimiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, subcarrier spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain (OFDM (Orthogonal Frequency Division Multiplexing) symbols, SC-FDMA (Single Carrier Frequency Division Multiple Access) symbols, and the like). The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the terminal 20 will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage device
1003 Auxiliary storage device
1004 Communication device
1005 Input device
1006 Output device
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a transmission unit configured to transmit a HARQ (Hybrid automatic repeat request) response to a base station;
a reception unit configured to receive control information of triggering retransmission of the HARQ response from the base station; and
a control unit configured to determine the HARQ response to be retransmitted, wherein
the control unit determines a cell to which a slot offset included in the control information is to be applied, applies the slot offset to the cell to determine a first slot in the cell, and determine, based on the first slot, a cell in which the HARQ response to be retransmitted has been transmitted and a second slot, and
the transmission unit transmits the determined HARQ response to the base station.

2. The terminal as claimed in claim 1, wherein
the control unit assumes that the cell to which the slot offset is to be applied is a cell used for retransmitting the determined HARQ response, or is a cell used for receiving the control information.

3. The terminal as claimed in claim 1, wherein
in a case where the first slot overlaps with a plurality of slots of a cell in which the HARQ response to be retransmitted has been transmitted, the control unit determines a first or last slot among the plurality of slots as the second slot.

4. The terminal as claimed in claim 1, wherein
the control unit determines the cell in which the HARQ response to be retransmitted has been transmitted, based on a PUCCH (Physical Uplink Control Channel) cell pattern.

5. The terminal as claimed in claim 4, wherein
in a case where the first slot overlaps with a plurality of cells in the PUCCH cell pattern, the control unit determines a first or last cell among the plurality of cells as the cell in which the HARQ response to be retransmitted has been transmitted.

6. A communication method performed by a terminal, the communication method comprising:
transmitting a HARQ (Hybrid automatic repeat request) response to a base station;
receiving control information of triggering retransmission of the HARQ response from the base station;
determining the HARQ response to be retransmitted;
determining a cell to which a slot offset included in the control information is to be applied, applying the slot offset to the cell to determine a first slot in the cell, and determining, based on the first slot, a cell in which the HARQ response to be retransmitted has been transmitted and a second slot; and
retransmitting the determined HARQ response to the base station.
